# EUROPEAN PATENT APPLICATION

(11) **EP 3 608 805 A1**
(43) Date of publication of application: **12.02.2020**
(21) Application number: 19190300.4
(22) Date of filing: 06.08.2019
(51) Int. Cl.: G06F 21/12, G06F 21/52, G06F 21/57, G06F 21/71

(54) **APPARATUS AND METHOD FOR EMBEDDED PROTECTION OF EXECUTABLE CODE**

(30) Priority: 06.08.2018 US 201862714926 P
(71) Applicant: Argus Cyber Security Ltd, 6789155 Tel Aviv (IL)
(72) Inventor: Kovelman, Alexei, 4335711 Ra'anana (IL); Dagmi, Or, 7634816 Rehovot (IL); Skverer, Tal, 7053701 Gedera (IL); Shalev, Amos, 6511207 Tel Aviv (IL); Roth, Gilad, 7170914 Modiin (IL); Alon, Bar, 6910512 Tel Aviv (IL)
(74) Representative: Thies, Stephan

(57) **Abstract**

An apparatus and method for enforcing control-flow integrity (CFI) may include obtaining assembly code; patching the assembly code to produce patched code including control-flow integrity (CFI) enforcement; and assembling the patched code into a binary output. Patching may include adding, to assembly code of a function, at least one of: assembly code for storing and validating a stack-cookie and assembly code for validating a return address.

## Description

### FIELD OF THE INVENTION

The present invention relates generally to cyber -security. More specifically, the present invention relates to embedded protection for executable code.

### BACKGROUND OF THE INVENTION

Embedded systems in general, and automotive electronic control units (ECUs) in particular, are vulnerable to cyber-attacks. Specifically, ECUs may be vulnerable to different types of remote attacks that attempt to execute code remotely on a system, through one of the external interfaces of the ECUs. ECUs typically run embedded, real time operating systems. For example, ECUs may be running the AUTOSAR operating system, optionally, ECUs may run any other operating system, for example Linux, QNX or Adaptive AUTOSAR.

### SUMMARY OF THE INVENTION

In some embodiments, a method of enforcing control-flow integrity (CFI) may include obtaining assembly code; patching the assembly code to produce patched code, the patched code including CFI enforcement; and assembling the patched code into a binary output. Patching may include adding, to assembly code of a function, at least one of: assembly code for storing and validating a stack-cookie; and assembly code for validating a return address.

Patching may include adding assembly code designed to: use a secret to scramble a return address before storing the return address; and use the secret to descramble the return address before it is used. A secret may be one of: randomly chosen, chosen according to an attribute of a target system and created using a predefined function. Patching may include producing patched code designed to store the secret in a stack-cookie. Patching may include producing patched code designed to determine whether or not an indirect call is to a start of a function. Patching may include producing patched code adapted to performing at least one action upon identifying a violation of a rule.

Patching may include producing patched code adapted to distinguish between functions that can be called via indirect call and other functions. Patching may include producing patched code designed to add, to a function in the assembly code, at least one of: a header and a trailer.

Patching may include adding assembly code designed to create a log entry related to violation of CFI. An embodiments may provide the binary output to a target system and the target system may binary output and create a log including information related to a violation of CFI. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a flowchart of a method according to illustrative embodiments of the present invention;
Fig. 3 shows a flowchart of a method according to illustrative embodiments of the present invention;
Fig. 4 graphically illustrates a memory translation method according to illustrative embodiments of the present invention; and
Fig. 5 shows a system according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

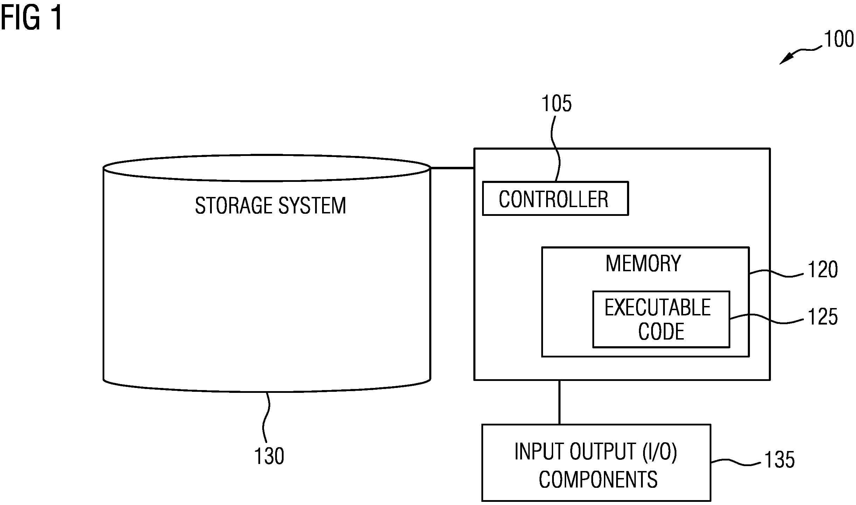

Reference is made to Fig. 1 below, showing a non-limiting, high-level block diagram of a computing device or system 100 that may be used to protect and secure execution of code according to some embodiments of the present invention.

Computing device 100 may include a controller 105 that may be a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a Flash memory, a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application that protects and secures execution of code as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein.

Storage system 130 may be or may include, for example, a hard disk drive, a CD-Recordable (CD-R) drive, a Blu-ray disk (BD), a universal serial bus (USB) device or other suitable removable and/or fixed storage unit.

Content may be loaded from storage system 130 into memory 120 where it may be processed by controller 105. For example, code including embedded code as described herein may be loaded into memory 120 and executed or used by controller 105 as further described herein.

In some embodiments, some of the components shown in Fig. 1 may be omitted. For example, memory 120 may be a non-volatile memory having the storage capacity of storage system 130. Accordingly, although shown as a separate component, storage system 130 may be embedded or included in system 100, e.g., in memory 120.

I/O components 135 may be an I/O device, may be used for connecting (e.g., via included ports) or they may include one or more point and click devices, screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multi-purpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units, and a plurality of storage units.

Embodiments of the invention address attacks on the ECUs. Specifically, embodiments of the invention provide security to embedded systems in general, and to Automotive electronic control units (ECUs) in particular. Embodiments of the invention may be applied to ECUs and may, security-wise, harden the ECUs thus making exploitation of vulnerability in ECUs much more difficult, if not impossible.

Some embodiments may provide CFI and Return Address Protections (RAP). In some embodiments, a stack cookie may be used for return address protection. CFI may generally verify (and permit, enable, prevent or interrupt) a flow or executable code (e.g., the sequence of applications, programs, routines or other executable code). A return address may be manipulated, for example, by scrambling it with some secret (the cookie), for example using a XOR operation. The secret may be randomly chosen when the system boots up. Optionally the secret may be unique to the specific instance of the system. Optionally the secret may be derived from a random number generator.

When a function terminates or exits (e.g., returns, or jumps-out to another function) a reverse operation may be applied to the return address in order to derive the original return address.

Additionally, or alternatively, protection may be applied just before a function returns or terminates. For example, to provide protection, an embodiment may verify that the return address is valid by examining the code or opcode just before the return address. If the opcode represents a "call to our function", or if the opcode represents "call indirect", then the return may be permitted. Otherwise, an error callback may be called in order to handle the CFI deviation.

In some embodiments, a combined approach may be utilized, where the stack cookie method and the indirect call protection are used together. Since in every function the first opcode is the opcode that change the return address (for the stack-cookie protection), each function starts with unique bytes that may be checked and verified and if indeed those unique bytes exist, the indirect call may be verified. This may allow CFI protection without additional ROM penalty.

An embodiment of the invention may permit indirect calls to every function in the code. Such approach may block any attack that tries to jump to the middle of a function.

An embodiment of the invention may distinguish between the functions that can be called via indirect calls and the other functions. This may be done by changing the stack-cookie opcode. For example, the opcode may add the stack-cookie in indirect functions and subtract the stack-cookie in regular functions.

A CFI solution may involve the compiler and the operating system. For example, a compilation process may include two steps: (1) - Compile C sources into Assembly language and (2) - Assemble the Assembly code into the binary output.

An embodiment of the invention may include (or improve a CFI solution by) patching the Assembly code between phase 1 and 2. The process may therefore include: (1) - Use the compiler in order to compile C sources into Assembly language, (2) - Add the CFI enforcement code to the Assembly language and (3) - Use the compiler in order assemble the Assembly code into the binary output. Accordingly, embodiments of the invention can support any compiler and/or any operating system.

Adding the CFI enforcement may include adding headers and/or trailers to relevant functions in the assembly language. Patching the binary may be done offline, e.g., during production. Patching the binary may be done automatically, in a vehicle, e.g., when an ECU boots up. An embodiment of the invention may generate logs upon detection of potential exploitation of the system. Such logs may be stored locally on the system and may optionally be uploaded to an offboard hub or server that may aggregate the logs from different vehicles and may analyze the logs to show the fleet operator the cyber security status of the system. Such logs may optionally include the address in which the violation was detected. Such logs may optionally include a stack trace that represents the location in which the violation was detected.

An embodiment of the invention may react to detection of a violation. Optionally the reaction may include blocking the exploitation attempt. Optionally the reaction may include restarting the system. Optionally the reaction may include resetting the system to a known state. Optionally the reaction may include resetting only the affected system thread to a known state.

Generally, ASLR is a security approach that randomizes code addresses in memory in order to make it harder for attackers to exploit vulnerabilities. Typical ASLR solutions assume that the code is compiled as position-independent, and that the loader of the code needs to relocate some addresses that cannot compiled as position independent code (PIC). Because in embedded environments, and especially in the automotive industry, the code executes directly from the FLASH, such relocation may not be possible. Furthermore, some of the modern compilers for the automotive industry do not support position independent compilation - and as such, cannot support ASLR.

Some embodiments of the invention provide an ASLR based security solution for embedded devices that do not allow such relocations based on using an additional address translation component, for example by using the MMU (Memory Management Unit) to translate addresses.

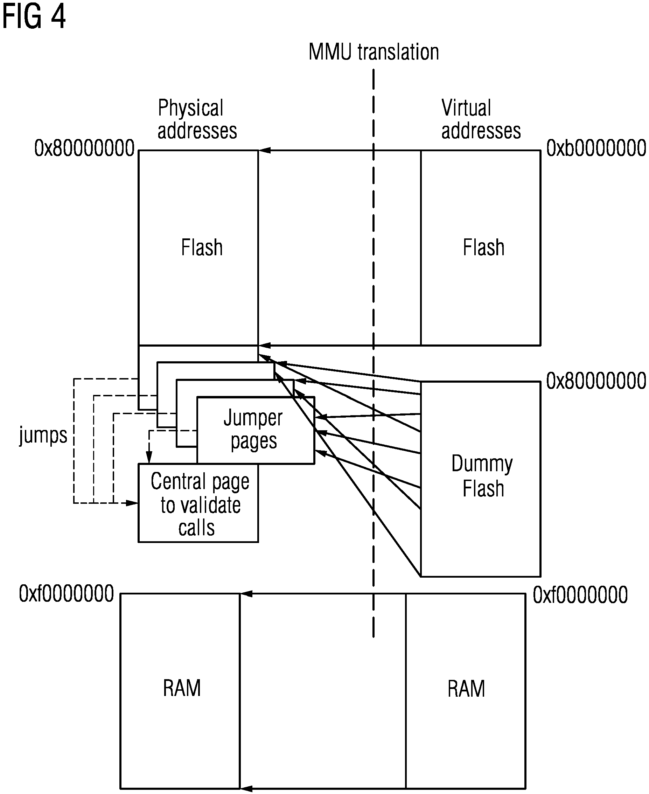

For example, and with reference to Fig. 4 which is further described below, let's assume that the code in a FLASH is accessed from physical addresses that start from 0x8000XXXX, and that, for the current boot, an ASLR unit or method applies a virtual address for the FLASH that starts from 0xb000XXXX. Let's also assume for that the RAM memory starts at physical address 0xf000XXXX.

An embodiment of the invention may configure an MMU to do identical translation between the RAM virtual addresses (e.g., 0xf000XXXX will be translated to 0xf000XXXX) and to translate the addresses in the 0xb000XXXX virtual domain into 0x8000XXXX such that the code will be fetch from the 0xb0000XXXX virtual addresses.

It is noted that relative jumps in the code will be done correctly. Absolute jumps will change the program counter (PC) register to 0x8000XXXX (because the code is not position independent). To handle this situation, the MMU will map the 0x8000XXXX virtual addresses into different physical pages in the FLASH (Optionally with overlap, many virtual pages can translated or mapped to the same physical page) in a way that every jump will execute some code snippet that will store the current address (optionally on the stack) and jump to a function that will read the ASLR "secret" (the offset between the virtual addresses and the physical addresses) from dedicated memory in the ram, reverse translate the physical address into virtual address (in the example above, the map or translate the 0x8000XXXX address into the 0xb000XXXX address, validate that the address is a valid, jumpable address (optionally using a similar approach as described in the CFI section above), and jump to the target, or to an error function.

As described, a computer-implemented method of enforcing CFI may include obtaining assembly code; patching the assembly code to produce patched code, the patched code including CFI enforcement; and assembling the patched code into a binary output. For example, executing a script or program, controller 105 may provide one or more files including C code as input to a compiler that may compile the C code to produce assembly code. Controller 105 may further examine and/or parse the assembly code and patch it, e.g., by adding operations and/or logic to the assembly code thus producing patched assembly code. For example, to patch assembly code, controller 105 may automatically add, e.g., to functions in the assembly code, logic that verifies or validates indirect calls and/or verifies or validates a stack cookie and/or verifies or validates a return addresses as described herein. Controller 105 may further assemble and/or link the patched assembly code to produce a binary output that may be an image executable or otherwise used by a target device or system. A target device or system may be an internet of things (IOT) device, an ECU, a smartphone or any other system or device to be protected by enforcing CFI as described.

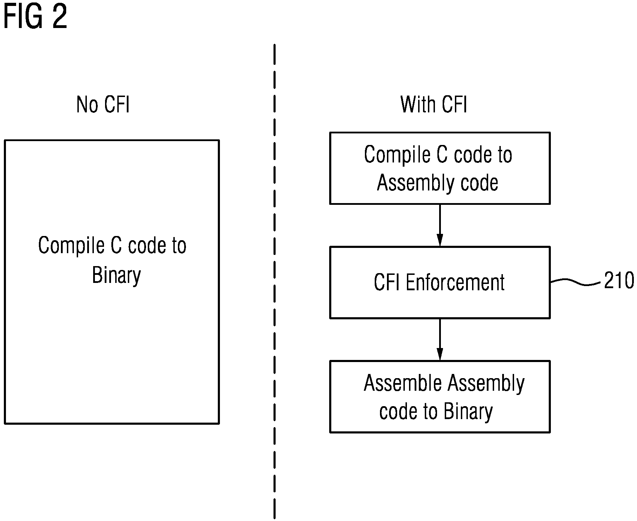

Reference is made to Fig. 2, a flowchart of a method according to illustrative embodiments of the present invention. As shown by block 210, after compiling code (e.g., C code) into assembly code, an embodiment may include CFI enforcement in the assembly code (e.g., by patching as described) and, as further shown, after patching the assembly code to produce patched assembly code that includes CFI enforcement, the patched assembly code may be assembled to produce binary output. Patching as referred to herein generally includes adding or modifying code such that functionality is added. For example, patching may include adding, to assembly code of a function, at least one of: assembly code for storing and validating a stack-cookie; and assembly code for validating a return address.

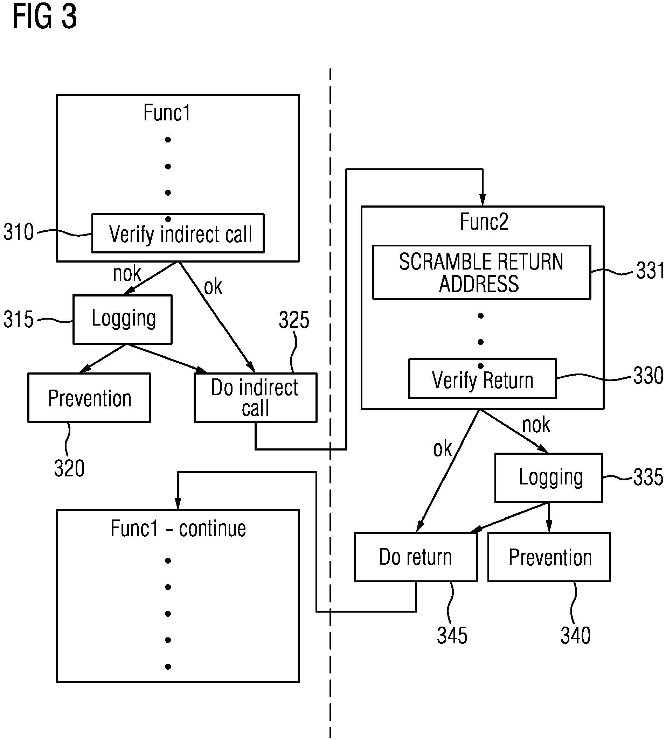

Reference is made to Fig. 3, a flowchart of a method according to illustrative embodiments of the present invention. As shown by block 310, logic for verifying indirect calls may be added to the original or input assembly code such that when a first function executes, prior to actually performing or executing an indirect call (e.g., a call to a second function using an address retrieve from a memory, stack or CPU register) the indirect call is verified.

For example, the patched code (and consequently, a binary output executed by a target system) may include code designed to determine whether or not an indirect call target is to a start of a function. For example, patching as described may include identifying, and recording, e.g., in a compressed list, addresses of functions in the final, compiled binary output (and/or in the patched assembly code), accordingly, an address used by an indirect call may be verified by a CPU in a target device. As shown by block 315, if the indirect call cannot be verified or validated, e.g., in the case where the address in the indirect call is to a middle of a function but not a start of one, an embodiment may log the event, e.g., record the address attempted to be used, a calling or called function and any other information such as time, system identification and so on.

Binary output created based on patched assembly code may be provided to a target system, when executed by the target system, the binary output may cause the target system to create a log including information related to a violation of CFI. For example, a log or log entry created and sent and/or stored may include any information related to a violation of CFI. For example, a graph or tree of flows may be identified by parsing, examining or inspecting assembly code and thus legitimate or known flows may be recorded, e.g., function A may call functions B and C but, based on analysis of the assembly code it may be recorded that function A never calls function D. Accordingly, an embodiment may detect, log and/or even block illegitimate calls (e.g., caused by a malicious entity that managed to control the code executed by a target system or otherwise tamper with image. Accordingly, executing a binary output produced based on patched code as described, some embodiments may distinguish between functions that can be called via indirect call and other functions.

In some embodiments, patched code and thus the binary output (e.g., image) produced as described may include code for performing at least one action upon identifying a violation or breach of a rule, constraint or criterion. Any rule, criterion or constraint related to CFI may be enforced, e.g., by a target system when executing code in the binary output produced as described. For example, a rule or constraint may include a set of functions that can (permitted to) be called by a specific function, thus, if, at run time, the specific function calls a function that is not the set, the rule or constraint is considered breached and an action may be performed as described. In another example, a rule for checking indirect calls may be breached if an indirect call is not to a start of a function. Embodiments of the invention may add any other rules, criteria or constraints to an input, original assembly code when producing patched code and binary output as described.

For example, as shown by block 320, upon detecting a violation (e.g., of a rule that identifies illegitimate indirect calls as described) a prevention action may be taken, e.g., the indirect call may be blocked or prevented, a target system may be shutdown or reset, an alert may be generated (e.g., on an infotainment screen) or sent and so on. As shown by block 325, if an indirect call is determined to be legitimate or expected then an embodiment may execute the indirect call.

As shown by block 330, possibly upon end of a function but immediately before returning to the calling function, an embodiment may verify the return address about to be used. For example, an embodiment may use a secret to scramble a return address before storing the return address, e.g., in a stack and the embodiment may use the secret to descramble the return address before it is used, e.g., when popped from a stack as shown by block 330.

For example, as shown by block 331, a binary output produced as described may include code that retrieves a return address (e.g., by popping it from a stack) scrambles the return address, e.g., by XORing the return address or using a secret encryption key and then stores the scrambled return address, e.g., in the stack. A secret (e.g., one used for scrambling and descrambling or unscrambling a return address) or a scrambled return address itself may be stored as a stack-cookie that may be retrieved or popped and used for verifying a return address as described. Alternatively, the code shown by block 331 may be executed before pushing a return address to the stack by a calling function.

A secret (e.g., one used for scrambling and descrambling or unscrambling a return address) may be randomly chosen (e.g., using a random number generator) or the secret may be selected according to an attribute of a target system, e.g., a media access control address (MAC). A secret as described may be and created using a predefined function, e.g., XOR, hash function and the like.

As shown by block 335, using a binary or image produced based on patched code as described, if a return address cannot be verified, a log entry may be created, sent and/or stored, e.g., as described with reference to block 315. As shown by block 340, an action related to prevention may be performed if a return address is not verified, e.g., an action as described with reference to block 320 may be performed. As shown by block 345, if a return address is determined as legitimate and embodiment may enable or allow execution to return to a return address, e.g., the address in a calling function.

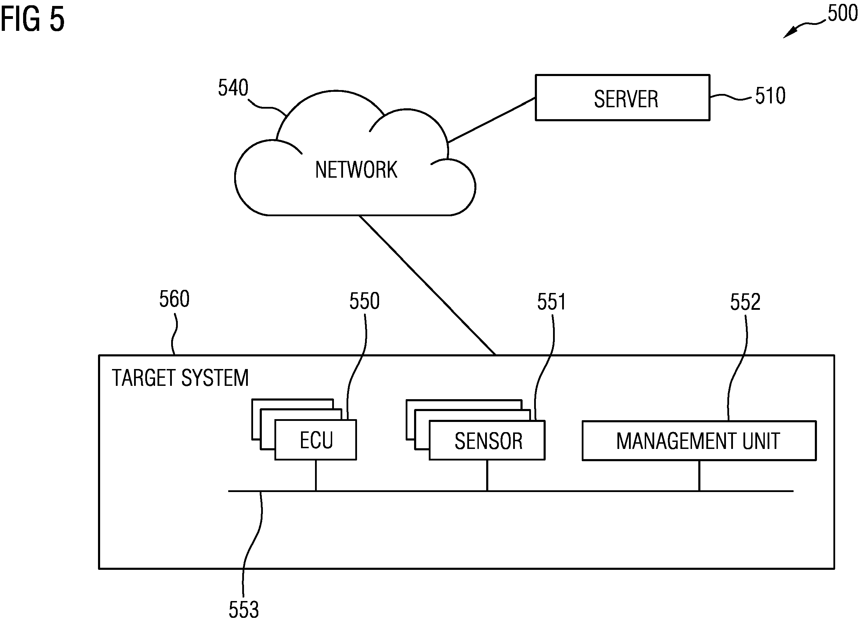

Reference is made to Fig. 5 which shows a system 500 according to illustrative embodiments of the present invention. As shown, system 500 may include server 510, target system 560 and network 540. Target system 560 may be any device, system, vehicle or any other applicable entity. For example, target system 560 may be, or it may be included or embedded in, an IoT device or a vehicle, e.g., an aircraft, car train or ship. Although, for the sake of simplicity and clarity, vehicles such as cars are mainly described herein, other vehicles such as ships, trains and aircrafts are similarly applicable, it will be understood that the scope of the invention is not limited by the type, usage or nature of target system 560. For example, target system 560 may be, or it may be included in, a ship, airplane or car that includes an in-vehicle network 553, a management unit 552, one or more ECUs 550 and one or more sensors 551 (collectively referred to hereinafter as ECUs 550 and/or sensors 551 or individually as ECU 550 and/or sensor 551, merely for simplicity purposes). For example, when an embodiment is included in an airplane, ship or spacecraft, an ECU 550 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 551 may be a unit that senses or measures, for example, elevation, acceleration, air speed or flow and the like. In some of embodiments, some of the elements shown in target system 560 may be omitted. For example, in an embodiment where target system 560 is an IoT device, target system 560 may only include a controller 105 and a memory 120 and the rest of the components shown in Fig. 5, e.g., in-vehicle network 553, sensors 551 and management unit 552 may be excluded from target system 260. Accordingly, it will be understood that components shown included in a target system 560 are optional and a target system 560 may include only one of the components shown, only two of the components and so on.

In-vehicle network 553 may be any suitable network that enables ECUs 550, sensors 551 and management unit 553 to communicate or exchange digital information. Network 553 may be, may include or may comprise any suitable network infrastructure and support any suitable protocol, e.g., Ethernet, CAN, IP, TCP and the like. Accordingly, numerous elements of network 553 are implied but not shown, e.g., routers, gateways etc. It will be recognized that embodiments of the invention are not limited by the nature of network 553. Each of server 510, ECUs 550 and management unit 552 may be, or may include components of, computing device or system 100. For example, patching assembly code as described may be done by a controller 105 in server 510 and verifying indirect calls and/or return addresses, e.g., at run time, may be performed by a controller 105 included in an ECU 550. Binary output may be created by server 510 and provided to ECUs 550 over network 540.

Network 540 may be any suitable network that enables server 510 and target system 560 to communicate or exchange digital information. Network 540 may be, may comprise or may be part of a private or public IP network, or the internet, or a combination thereof. Additionally, or alternatively, network 540 may be, comprise or be part of a global system for mobile communications (GSM) network. For example, network 540 may include or comprise an IP network such as the internet, a GSM related network and any equipment for bridging or otherwise connecting such networks as known in the art. In addition, network 540 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 540 are implied but not shown, e.g., access points, base stations, communication satellites, GPS satellites, routers, telephone switches, etc. It will be recognized that embodiments of the invention are not limited by the nature of network 540.

The terms "binary", "binary output" and "image" as used in herein refer to software and possibly additional data used for operating a computing device, for example, binary output as referred to herein may be an image produced by server 510 and sent, from server 510 to one or more ECUs 550.

In the description of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art.

While certain features of the invention have been illustrated and described herein, many modifications, substitutions, changes, and equivalents may occur to those skilled in the art. Various embodiments have been presented. Each of these embodiments may of course include features from other embodiments presented, and embodiments not specifically described may include various features described herein.

## Claims

1. A computer-implemented method of enforcing control-flow integrity (CFI), the method comprising:
obtaining assembly code;
patching the assembly code to produce patched code, the patched code including control-flow integrity (CFI) enforcement; and
assembling the patched code into a binary output.

2. The method of claim 1, wherein the patching includes adding, to assembly code of a function, at least one of:
assembly code for storing and validating a stack-cookie; and
assembly code for validating a return address.

3. The method of anyone of the preceding claims, wherein the patching includes adding assembly code designed to:
use a secret to scramble a return address before storing the return address; and
use the secret to descramble the return address before it is used.

4. The method of claim 3, wherein the secret is one of: randomly chosen, chosen according to an attribute of a target system and created using a predefined function.

5. The method of claim 3 or 4, wherein the patched code includes code designed to store the secret in a stack-cookie.

6. The method of anyone of the preceding claims, wherein the patched code includes code designed to determine whether or not an indirect call is to a start of a function,
and/or
code for performing at least one action upon identifying a violation of a rule,
and/or
code distinguishing between functions that can be called via indirect call and other functions.

7. The method of anyone of the preceding claims, wherein the patching includes adding, to a function in the assembly code, at least one of: a header and a trailer.

8. The method of anyone of the preceding claims, comprising:
Providing binary output to a target system;
executing the binary output by the target system; and
creating, by the target system, a log including information related to a violation of control-flow integrity (CFI).

9. The method of claim 1, wherein the patching includes adding assembly code designed to create a log entry related to violation of control-flow integrity (CFI).

10. Apparatus comprising:
a memory (120); and
a controller (105) configured to:
obtain assembly code;
patch the assembly code to produce patched code, the patched code including control-flow integrity (CFI) enforcement; and
assemble the patched code into a binary output.

11. The apparatus of claim 10, wherein the controller (105) is adapted to add, to assembly code of a function, at least one of:
assembly code for storing and validating a stack-cookie; and
assembly code for validating a return address.

12. The apparatus of anyone of claims 10 to 11, wherein the controller (105) is adapted to add, to the assembly code, code designed to:
use a secret to scramble a return address before storing the return address; and
use the secret to descramble the return address before it is used.

13. The apparatus of claim 12, wherein
the secret is one of: randomly chosen, chosen according to an attribute of a target system and created using a predefined function
and/or
the patched code includes code designed to store the secret in a stack-cookie.

14. The apparatus of anyone of claims 10 to 13, wherein the patched code includes code designed to determine whether or not an indirect call is to a start of a function
and/or
code for performing at least one action upon identifying a violation of a rule
and/or
code for performing at least one of:
distinguishing between functions that can be called via indirect call and other functions; and
creating a log entry including information related to a violation of control-flow integrity (CFI).
